(19) Europäisches Patentamt
European Patent Office
Office européen des brevets

(11) Publication number: 0 210 149
A2

(12) **EUROPEAN PATENT APPLICATION**

(21) Application number: 86850208.9

(22) Date of filing: 11.06.86

(51) Int.Cl.[4]: C 08 G 73/10
C 09 J 3/16, C 08 J 5/12

(30) Priority: 20.06.85 US 764901

(43) Date of publication of application:
28.01.87 Bulletin 87/5

(84) Designated Contracting States:
BE CH DE FR GB IT LI NL SE

(71) Applicant: NATIONAL AERONAUTICS AND SPACE ADMINISTRATION
NASA Headquarters
Washington, D.C. 20546(US)

(72) Inventor: St. Clair, Terry Lee
17 Roberts Landing
Poquoson, Va. 23662(US)

(72) Inventor: Burks, Harold David
171 D-Lane Drive
Newport News Va. 23602(US)

(72) Inventor: Progar, Donald Joseph
203 Ilex Drive
Grafton Va. 23692(US)

(74) Representative: Nordén, Ake et al,
AWAPATENT AB Box 7402
S-103 91 Stockholm(SE)

(54) **Copolymides with a combination of flexibilizing groups.**

(57) Novel copolyimides are prepared by reacting one or more aromatic dianhydrides with a meta-substituted phenylene diamine and an aromatic bridged diamine. The incorporation of meta-substituted phenylene diamine derived units and bridged aromatic diamine derived units into the linear aromatic polymer backbone results in a copolyimide of improved flexibility, processability, and metal-flow characteristics. The novel copolyimides are especially useful as thermoplastic hot-melt adhesives.

# COPOLYIMIDES WITH A COMBINATION OF FLEXIBILIZING GROUPS

This invention relates to novel copolyimides in general and more particularly to novel copolyimides derived from the reaction of one or more aromatic dianhydrides with a meta-substituted phenylene diamine and a bridged aromatic diamine. The incorporation of the meta-substituted phenylene diamine derived units and bridged aromatic diamine derived units into the linear aromatic polymer backbone results in a copolyimide of improved flexibility, processability and melt-flow characteristics.

Aromatic polyimides are generally difficult to process because they exhibit only a limited degree of flow even at high temperatures and when subjected to high pressure. These materials are, however, exceptionally thermally stable and resist attack by most solvents. Additionally, they generally have very high glass transition temperatures because of their aromatic character. Because of desirable properties such as resistance to solvents and the high glass transition temperature, many attempts have been made to prepare aromatic polyimides which can be readily processed.

Prior art methods have included a solution by incorporating sulfur linkages into a polyimide backbone, the use of particulated oligomeric polyetherimide acids which may be converted to a high molecular weight

polymer system by melt polymerization, the use of varied proportions of different polyetherimide segments in an attempt to reach the optimum balance between processability and solvent resistance, and preparing certain polyetherimides which can be reinforced with various fillers to form composites. The prior art further teaches that the incorporation of flexible moieties into the backbone of a polyimide can increase thermoplastic character, and that the incorporation of phenylene ether units into polyimides can improve melt-flow properties. Even though all of the above prior art systems have contributed in various ways to improving the processibility of linear aromatic polyimides, there is still a definite need in the art for enhanced melt-flow properties in polyimides in order that they may be used for applications such as holt-melt adhesives or as matrix resins for fiber-reinforced composites.

Accordingly, the present invention provides polyimides with improved flow properties, low melt viscosities, high glass transition temperatures and which soften to a high degree above their glass transition temperatures. The polyimides are resistant to solvents, can be solvent or hot-melt coated onto fibers for preparation of compositions, and can be used as hot-melt adhesives. In addition, the polyimides become more planar when exposed to temperatures above their glass transition temperature. The invention further provides a process for making polyimides of enhanced melt-flow characteristics and provides for the use of the polyimides as hot-melt adhesives for bonding materials together by surface attachment.

According to the present invention, the desired improvements are achieved by incorporating the proper mix of flexibilizing units into the backbone of a linear aromatic polyimide. The flexible units independently

have been shown by others to enhance thermoplastic character in polyimides, however, in the present invention the proper incorporation of the prepreg combinations of these units leads to unexpected synergistic improvements in softening, thermoplastic and flow behavior of the resulting polymers.

The polymer with improved softening, thermoplastic and flow behavior consists essentially of chemically combined recurring units of the formulas:

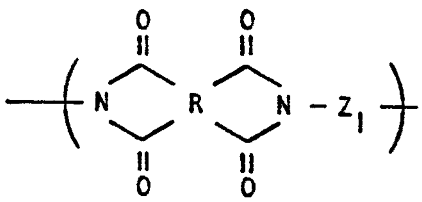 and 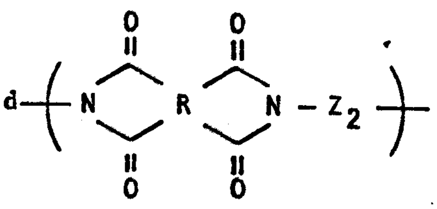

wherein R may differ between the recurring units and is an aromatic tetravalent radical; and wherein $Z_1$ is a bridged radical of the formula:

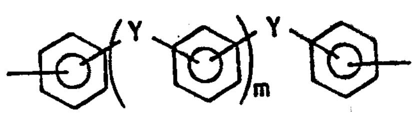

where Y may differ within the radical and is selected from the group consisting of -O-, -S-, -CO-, $-SO_2-$,

-NH-, -SO-, $-\overset{\overset{O}{\|}}{\underset{\underset{R'}{|}}{P}}-$, $-C(CF_3)_2-$, $-C(CH_3)_2$ where R' is alkyl or aryl and m is 0, 1, 2 or 3; and wherein $Z_2$ is of the formula:

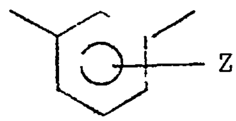

where Z is selected from the group consisting of -Br-, Cℓ, -F-, $-CF_3-$, -aryl-, or -alkyl.

Suitable R's include:

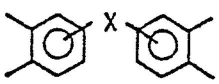 , 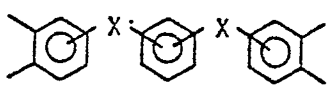 , 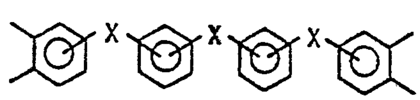 ,

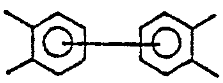 , 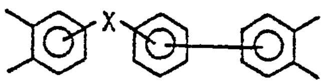

wherein X may differ within the R radical and is selected from the group consisting of -O-, -S-, -CO-, $SO_2$, -NH-, -SO-, $-C(CF_3)_2-$, $-C(CH_3)_2-$, and $-\underset{R'}{\overset{O}{\overset{\|}{P}}}-$ where R' is alkyl or aryl, as well as others that would be obvious to those skilled in the art.

Suitable bridged radicals include:

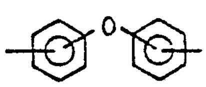 , 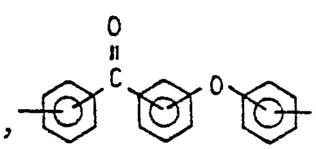 , 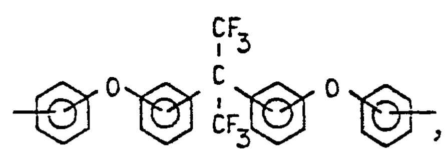 ,

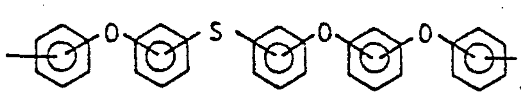 , 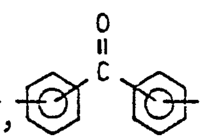 , 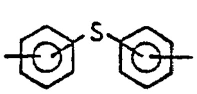 , 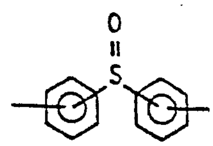

as well as others that would be obvious to those skilled in the art.

Examples of the $Z_2$ radicals are:

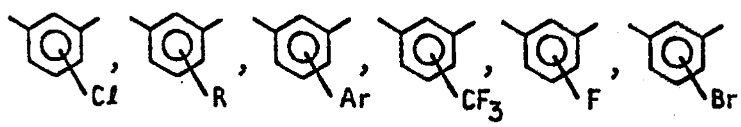
, , , , ,

wherein R = alkyl and Ar = aryl.

A special case is also made for polyimides of the following structure:

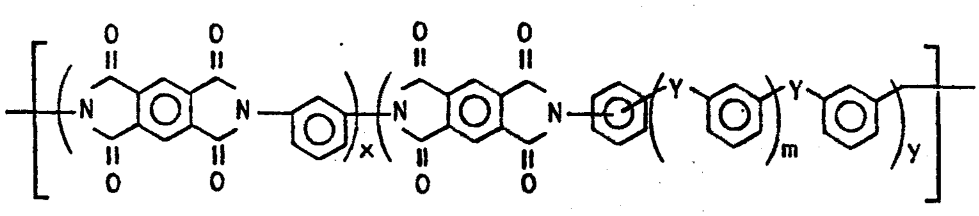

wherein y and m are as defined above and x and y are at least equal to one and are positive whole numbers.

Representative polymers are prepared according to the present invention by dissolving the appropriate dianhydrides and diamines in solvents such as N,N-dimethylacetamide (DMAc), N-methylpyrrolidone (NMP), N,N-dimethylformamide (DMF), and bis(2-methoxyethyl)-ether. Other solvents such as tetrahydrofuran, dioxane, dimethylsulfoxide as well as others obvious to those skilled in the art can be used.

After the polymerization has occurred in the particular solvent, the resulting poly(amide-acid) is precipitated in a non-solvent such as water, an alcohol, or a hydrocarbon. The precipitated poly(amide-acid) is then filtered from the solution, dried at a temperature of 20°C-30°C for ten to fifteen hours, and heated in an oven for approximately one hour at about 300°C. Chemical imidization can also be appropriate utilizing dehydrating agents such as acetic anhydride in pyridine, propionic anhydride in pyridine, butyric anhydride in pyridine, trifluoroacetic acid in pyridine, dicyclohexylcarbodiimide, or others obvious to those skilled in the art. The conversation of the poly(amide-acid) to the corresponding isoimide should appropriately be between 5 and 100%.

Copolyimides are prepared using three dianhydrides. The structures of these copolyimides are as follows:

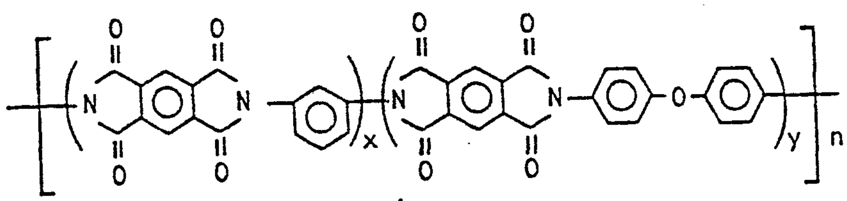

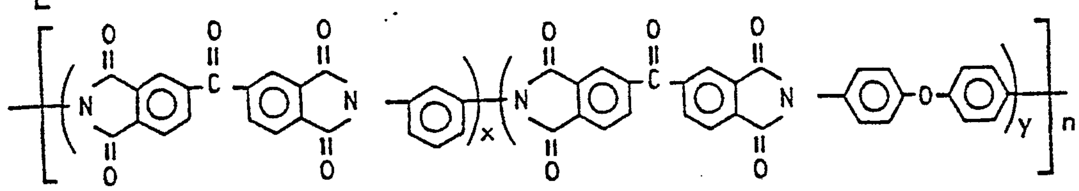

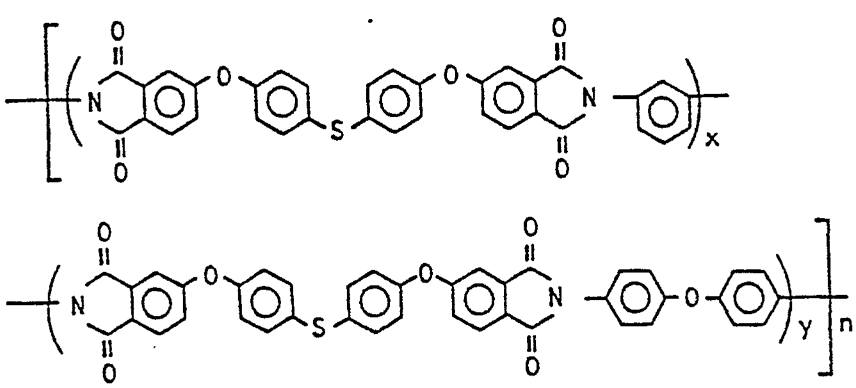

where x:y = 1:1 and n is between 5 and 100.

In these three cases, films are prepared from the polymers by applying a 0.15 inch coating of the poly(amide-acid) in DMAc onto a piece of plate glass, evaporating the solvent and heating the film for approximately one hour at about 100°C, then for approximately one hour at about 200°C, and then for approximately one hour at about 300°C. After removal of the films from the glass, they all exhibit a smoother, more uniform surface than the corresponding polymer films where the ratio x:y is 1:0 or 0:1. In order to more quantitatively assess the effect of using these two flexibilizing groups in conjunction with each other a series of copolyimides of the following compositions are prepared in DMAc and thermally converted to the imide.

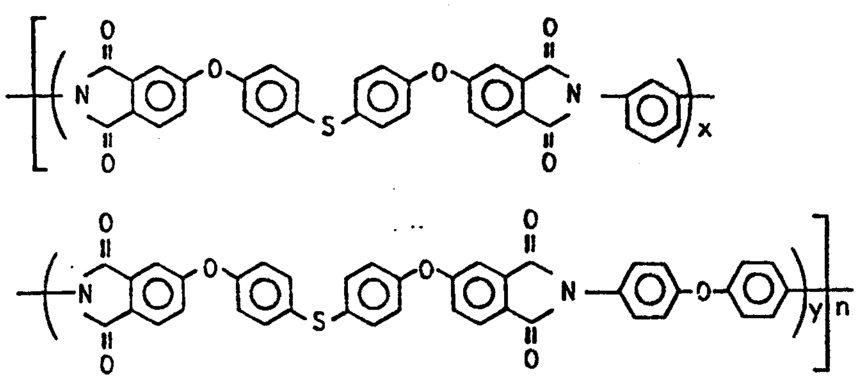

where y:x is 1:3, 2:2 and 3:1, and where n is 5-100. The polymer designation (Tables I-V) for the 3:1 structural formula is 431, that for the 2:2 structural formula is 422, and the designation for the 1:3 structure is 413.

In the case where x = 0, this polymer is designated BDSDA/4,4'-ODA, and where y is 0, this polymer is designated BDSDA/m-PDA. Another polymer of the following structure with the designation BDSDA/3,3'-ODA

was prepared for comparison:

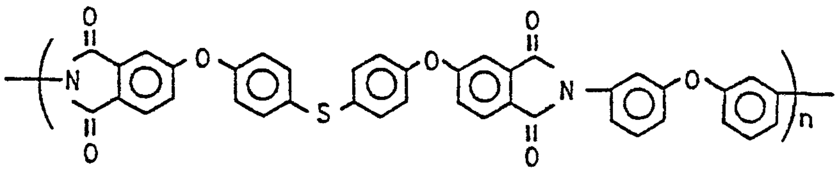

The glass transition temperatures of these polymers are shown in Table I.

TABLE I

| Polymer | Copolymer Molar Ratio | Glass Transition Temperature |
|---|---|---|
| | y:x | $T_g$, °C |
| BDSDA/m-PDA | 0:4 | 224 |
| 413 | 1:3 | 220 |
| 422 | 2:2 | 216 |
| 431 | 3:1 | 217 |
| BDSDA/4,4'-ODA | 4:0 | 217 |
| BDSDA/3,3'-ODA | -- | 196 |

The rheological properties of the polymers were evaluated using a capillary rheometer. This technique allows one to quantify melt viscosity as a function of strain rate using a mechanical screw-driven extruder. The data presented for viscosity are shown as apparent viscosity because no correction was made for wall friction in the capillary. Therefore all data are relative and not absolute.

The two polymers, BDSDA/m-PDA and BDSDA/4,4'-ODA, were run as extremes in comparison for the three copolymers, 413, 422, and 431. The BDSDA/3,3'-ODA was prepared as an example of a similar polymer with two types of flexibility in the diamine unit. Attempts to extrude the BDSDA/4,4'-ODA through the capillary were unsuccessful because it would not flow within the capability limits of the rheometer ($5 \times 10^6$ Pa-sec). Comparative data for all of the systems are shown in Table II (all runs were made at 350°C).

TABLE II

| Polymer | Strain Rate, $sec^{-1}$ | Apparent Viscosity Pa-sec |
|---|---|---|
| BDSDA/4,4'-ODA | 0.404 | No flow |
| BDSDA/m-PDA | 0.404 | $2.10 \times 10^5$ |
| BDSDA/3,3'-ODA | 0.404 | $7.95 \times 10^5$ |
| 413 | 0.404 | $3.04 \times 10^5$ |
| 422 | 0.404 | $1.50 \times 10^5$ |
| 431 | 0.404 | $2.62 \times 10^5$ |

The smaller the apparent viscosity number the greater is the ease of flow. From this Table, it is clear that the 422 system has the lowest viscosity.

This test was also performed at a higher strain rate of 13.456 $sec^{-1}$ and this data is shown in Table III (350°).

TABLE III

| Polymer | Strain Rate, $sec^{-1}$ | Apparent Viscosity Pa-sec |
|---|---|---|
| BDSDA/4,4'-ODA | 13.456 | No flow |
| BDSDA/m-PDA | 13.456 | $0.323 \times 10^5$ |
| BDSDA/3,3'-ODA | 13.456 | $0.669 \times 10^5$ |
| 413 | 13.456 | $0.346 \times 10^5$ |
| 422 | 13.456 | $0.227 \times 10^5$ |
| 431 | 13.456 | $0.338 \times 10^5$ |

Again, the 422 system has the lowest viscosity of all the systems.

The highest strain rate of which the rheometer was capable was investigated for these same polymers to see if this trend held. This data is in Table IV (350°C).

TABLE IV

| Polymer | Strain Rate, $sec^{-1}$ | Apparent Viscosity Pa-sec |
|---|---|---|
| BDSDA/4,4'-ODA | 134.560 | No flow |
| BDSDA/m-PDA | 134.560 | $0.109 \times 10^5$ |
| BDSDA/3,3'-ODA | 134.560 | $0.134 \times 10^5$ |
| 413 | 134.560 | $0.107 \times 10^5$ |
| 422 | 134.560 | $0.079 \times 10^5$ |
| 431 | 134.560 | $0.085 \times 10^5$ |

Again even at this highest strain rate (134.56 $sec^{-1}$) the 422 polymer exhibited the lowest viscosity. It was quite surprising that in each case the BDSDA/3,3'-ODA exhibited the highest viscosity since this system has flexibility due to the oxygen bridging group as well as the added flexibility introduced through the meta-linkages. However, in each case this polymer was extrudable where the corresponding BDSDA/4,4'-ODA with only one flexibilizer was not.

The key feature illustrated in these Tables is that the 422 copolymer always exhibits the lowest viscosity and all of the copolymers (413, 422 and 431) flow through the capillary whereas the BDSDA/4,4'-ODA does not. In addition the 422 copolymer exhibits a lower viscosity in each case than does the BDSDA/m-PDA. This data proves convincingly that the 1:1 copolymer (422) exhibits higher flow or lower viscosity than the pure polymers BDSDA/m-PDA and BDSDA/4,4'-ODA. This attribute is an unexpected result which makes this copolymer very attractive for fabrication procedures.

The mechanical properties of these polymers are shown in Table V. The tensile tests were performed on the extrudate from various capillary rheometer runs. All mechanical properties were determined at room temperature using an Instron Testing Machine Model TT-C.

TABLE V

TENSILE PROPERTIES

| POLYMER | STRENGTH, AVG. MPa | STRENGTH, RANGE MPa | MODULUS, AVG. GPa | DEGREE OF MELT FRACTURE** |
|---|---|---|---|---|
| BDSDA/4,4'-ODA | -- | -- | -- | No Flow |
| 413 | 60.0 (8.71 ksi) | 39.1 - 87.9 | 1.26 (182 ksi) | High |
| 422 | 82.7 (12.0 ksi) | 72.1 - 92.1 | 1.48 (215 ksi) | Moderate |
| 431 | 66.7 (9.68 ksi) | 43.8 - 91.7 | 1.40 (204 ksi) | High |
| BDSDA/m-PDA | 85.1 (12.3 ksi) | 58.0 - 100.2 | 1.47 (214 ksi) | Moderate |
| BDSDA/3,3'-ODA | 30.4 (4.40 ksi) | 17.7 - 39.9 | 0.99 (143 ksi) | Very High |

Each value reported in Table V is the average of one polymer extruded at six different strain rates in the range 0.404 - 134.560 $sec^{-1}$, and the melt fraction was measured at the highest strain rate (134.560 $sec^{-1}$). Of particular note is that the 422 copolymer and the BDSDA/m-PDA polymer exhibit nearly identical tensile strengths and moduli and the variability in strength is slightly lower for the 422 copolymer. This shows that no sacrifice in mechanical properties results due to copolymerization. Also of importance is that the degree of melt fracture (undesirable) is only moderate for the 422 copolymer and the BDSDA/m-PDA. In all other cases the degree of melt fracture was higher.

Thus, copolymers of polyimides with both flexible bridging groups and meta-linkages in the diamine-derived portion of the polymer have afforded flow properties superior to either of the corresponding homopolymers. This technique and these compositions clearly lead to polyimides with unusual and unexpected flow properties and thus offer an improvement over the state-of-the-art systems.

The 422 copolymer was further evaluated as a hot-melt adhesive. The evaluation, based on lap shear strengths, involved the determination of a bonding cycle and thermal exposure.

An adhesive tape comprising a glass cloth coated with several layers of the 422 copolyimide was placed between heated and primed surfaces of two titanium adherends using a surface overlap of about 1.25 cm. The assembly was placed in a bonding press and subjected to a bonding cycle comprising the steps of heating the polyimide tape under 50-500 psi pressure at a rate of about $7^o$-$10^oC$/min from ambient temperature to $340^o$-$345^oC$, holding the polyimide at $340^o$-$345^oC$ for approximately one hour, and cooling the assembly

under pressure to -120° to -160°C. The assembly was then removed from the bonding press.

Tests were then performed on bonded adherends formed in this manner to determine the effects on lap shear strengths for thermal exposure for 1000 hours at 204°C. Thermal exposure was performed in a forced air oven controlled within ±1% of exposure temperature. Lap shear tests were conducted at room temperature, 177°C, and 204°C before (controls) and after exposure giving lap shear strengths of 35.5, 22.0 and 15.0 MPa, respectively (before exposure) and 34.0, 22.5, and 19.5 MPa, respectively (after exposure). No significant difference in lap shear strength is noted for those tested at room temperature and 177°C for the controls and the thermally exposed specimens. A substantial increase in average lap shear strength at 204°C was obtained for those thermally exposed at 204°C compared to the controls. Tested specimens failed 100% cohesively except for the 204°C control specimens which failed primarily cohesively with some adhesive type failure.

A significant increase in Tg (18°C) was determined for the thermally exposed specimens which is a common occurrence due to further polymer cure, polymer oxidation, and/or elimination of trapped volatiles. This possibly could account for the increase in lap shear strength seen for the thermally exposed specimens tested at 204°C.

It is apparent from these tests that the polymers of the invention are useful as adhesives and that the 422 polymer has exceptional characteristics for this application.

<u>Specific Examples</u>

<u>Example 1</u>

10.2096 g (0.02 moles) of 4,4'-bis(3,4-dicarboxyphenoxy) diphenylsulfide dianhydride (BDSDA), 1.0012 g

(0.005 moles) of 4,4'-diaminodiphenyl ether (4,4'-ODA), and 1.6222 g (0.015 moles) of 1,3-diaminobenzene (m-PDA) were allowed to react in 51.33 g of N,N-dimethyl-acetamide (DMAc) at room temperature for about two hours. Molecular weight build up occurred during this time as evidenced by an increase in solution viscosity. Inherent viscosity of the solution as determined at 0.5% concentration in DMAc at 25°C was 0.378 (Copolyimide 413).

Example II

10.2096 g (0.02 moles) of BDSDA, 2.0024 g (0.01 moles) of 4,4'-ODA, and 1.08144 g (0.01 moles) of m-PDA were allowed to react in 53.172 g of DMAc at room temperature for two hours. The inherent viscosity was 0.441 (Copolyimide 422).

Example III

10.2096 (0.02 moles) of BDSDA, 3.0036 g (0.015 moles) of 4,4'-ODA, and 0.54072 g (0.005 moles) of m-PDA were allowed to react in 55.01 g of DMAc at room temperature for two hours. The inherent viscosity was 0.459.

Example IV

10.2096 g (0.02 moles) of BDSDA and 4.0048 g (0.02 moles) of 3,3'-diaminophenyl ether (3,3'-ODA) were allowed to react in 56.85 g of DMAc at room temperature for two hours. The inherent viscosity was 0.424.

Example V

20.4192 g (0.04 moles) of BDSDA and 4.3258 g (0.04 moles) of m-PDA were allowed to react in 98.98 g of DMAc at room temperature for two hours. The inherent viscosity was 0.606.

Example VI

5.1048 g (0.01 moles) of BDSDA and 3.2212 g (0.01 moles) of benzophenonetetracarboxylic dianhydride (BTDA) were mixed with 2.0024 g (0.01 moles) of 4,4'-ODA and 1.08144 g (0.01 moles) of m-PDA in 51 g of DMAc. This

mixture was allowed to react for two hours at room temperature. The inherent viscosity was 0.890.

Example VII

4.3624 g (0.02 moles) of pyromellitic dianhydride (PMDA), 2.0024 g (0.01 moles) of 4,4'-ODA, and 1.0814 g (0.01 moles) of m-PDA were allowed to react for two hours at room temperature in 42.16 g of DMAc. The resultant inherent viscosity was 1.058.

Example VIII

3.2224 g (0.01 moles) of BTDA, 1.0012 g (0.005 moles) of 4,4'-ODA, and 0.54072 g (0.005 moles) of m-PDA in 26.97 g of DMAc were allowed to react at room temperature for two hours. The inherent viscosity was 1.154.

Example IX

The poly(amide-acid) solution from Example VII was cast onto a glass plate at a thickness of 0.02 inch and the solvent was allowed to evaporate. The resulting polymer film was heated for approximately one hour at about 100°C, then for approximately one hour at about 200°C and finally for approximately one hour at 300°C. Removal of the film from the glass plate yielded a very flexible, smooth yellow film.

Example X

The polymer solution from Example VIII was treated as in Example IX to yield a very flexible, smooth yellow film.

Example XI

The six polymer solutions from Examples I - VI were each separately poured into water in a blender to precipitate the polymer. In each case the solid polymer was collected via suction filtration. Each polymer was air dried at 20°-30°C for ten to fifteen hours and then subjected to a thermal profile in an air oven for approximately one hour at about 100°C, for approximately one hour at about 200°C, and finally for

approximately one hour at about 300°C. The individual polymers were chopped to a granular consistency.

Example XII

Each polymer solid from Example XI was evaluated for flow properties by placing each one in a capillary rheometer and heating them to about 350°C. At this temperature, they were subjected to strain rates from 134.560 to 0.404 $sec^{-1}$ in order to extrude them and to measure their viscosities. Each of the six extrudates, approximately 0.17 cm in diameter and 2.54 cm in gage length, was measured for its tensile properties in the direction of extrusion at a crosshead speed of 0.51 cm/min. ASTM Standard D638-82a was used as a guide, but due to lack of material, sample size was decreased from recommended ASTM size.

Example XIII

Adhesive tape was prepared by brush-coating a 422 polyamic-acid, 20% solids solution in diglyme, $\eta_{inh}$ (inherent viscosity) of 0.789, onto 112 E-glass cloth with A-1100 finish ($\gamma$-aminopropysilane). Prior to coating, the glass cloth (tightly mounted in a metal frame) was initially oven-dried for ten minutes at 100°C. The 0.01 cm thick glass cloth served as a carrier for the adhesive as well as for bondline thickness control and an escape channel for solvent. Coatings of the polymer solution were applied to the glass cloth until a thickness of 0.020-0.025 cm was obtained. After a primer coat (approximately 4% solids solution) was applied, each coat application thereafter was air-dried for one-half hour, placed in a forced air oven, heated from room temperature to about 100°C, held approximately one hour at about 100°C, then heated to about 150°C, held approximately two hours at about 150°C, and then heated to about 175°C, and held approximately three hours at about 175°C. Some

blistering of the polymer occurred due to the above treatment.

Example XIV

The prepared adhesive tape (Example XIII) was used to bond titanium adherends (Ti 6Al-4V, per Mil-T-9046E, Type III Comp. C) with a nominal thickness of 0.13 cm. The four-fingered Ti(6Al-4V) panels were surface treated with a Pasa-Jell 107 (tradename for a titanium surface treatment available from Semco, Glendale, California) treatment to form a stable oxide on the surface. The treated adherends were primed within one hour of the surface treatment by applying a thin coat, approximately $2.5 \times 10^{-2}$mm of the 20% solids solution on the surface to be bonded. They were then air dried in a forced-air oven for approximately fifteen minutes at about $100^{\circ}C$ and approximately fifteen minutes at about $150^{\circ}C$. The primed adherends were stored in a polyethylene bag and placed in a desiccator until needed. Lap shear specimens were prepared by inserting the adhesive tape between the primed adherends using a 1.27 cm overlap (ASTM D-1002).

The specimens were assembled in a bonding jig in such a manner as to hold the specimens securely while being bonded. The assembly was placed in a hydraulic press and 50-500 psi pressure was applied. The temperature, which was monitored by a thermocouple spot welded next to the bondline of one of the specimens, was increased at a rate of $7^{\circ}$-$10^{\circ}C$/min up to $340^{\circ}$-$345^{\circ}C$. The specimens were held at $340^{\circ}$-$345^{\circ}C$ and 50-500 psi for one hour. The press was then cooled to $-120^{\circ}$ to $-160^{\circ}C$, still under pressure. The bonded specimens were thereafter removed from the press and the bonding jig and listed for lap shear strengths.

Specimens were soaked at temperature in a clam-shell, quartz-lamp oven and were held at

temperature for ten minutes prior to testing. Temperatures were controlled to within ±3°C for all tests. Bonded thickness was determined as the difference between the total bonded thickness and the titanium adherend thickness. The average bondline thickness was 0.20 mm with a range of 0.12 mm and 0.24 mm.

A rather severe 72 hour water-boil test was conducted in laboratory glassware containing boiling distilled water. Lap shear specimens were immersed above the bonded area at all times during the 72 hour period. Lap shear strengths were determined at room temperature, 177°C, and 204°C. The test produced decreased strengths at all test temperatures indicating a lack of resistance to the effects of water on the adhesive system, i.e., the adhesive and treated titanium surface. The lap shear strength values decreased by 20% at room temperature, 41% at 177°C, and 70% at 204°C. A more realistic test would be to expose the lap shear specimens to a controlled cyclic humidity condition more representative of what an adhesive system would experience during the intended application.

Example XV

16.273 g (0.050 moles) of benzophenonetetracarboxylic dianhydride (BTDA) was slurried (at room temperature in a 1000 ml cylindrical reaction flask with a removable four-necked top) with a mixture of 35 g 2-methoxyethyl ether (diglyme) and 100 g N,N-dimethylacetamide (DMAc). 5.006 g (0.025 moles) of 4-4'-diaminodiphenyl ether (ODA) was added and stirred for fifteen minutes when the reaction mixture became transparent due to all the materials going into solution as this initial reaction occurred. 2.704 g (0.025 moles) of meta-phenylenediamine (MPD) was added and the solution stirred for an additional thirty-five minutes. The resulting polyamic-acid polymer solution was decanted

from the vessel and an inherent viscosity of 0.517 dl/g was obtained at 0.5% solids in DMAc. In the above reaction a small quantity of a chain stopper, e.g., phthalic anhydride or aniline (0.002 moles) could be employed to control molecular weight.

Example XVI

Adhesive tape was prepared by brush coating a primer solution of the polyamic-acid solution of Example XV (diluted to approximately 7.5 wt/% solution in DMAc) onto 112 E-glass cloth with A-1100 finish ($\gamma$-aminopyropysilane). Prior to coating, the glass cloth (tightly mounted on a metal frame) was dried in a forced-air oven for thirty minutes. The 0.01 cm thick glass cloth served as a carrier for the adhesive as well as for bondline control and an escape channel for solvent. Coatings of the polymer solution were applied to the glass cloth until a thickness of 0.20-0.25 cm was obtained following the coating procedure defined in Example XIII. The adhesive tape as prepared was used to bond titanium adherends for determination of reasonable bonding conditions to use in further investigations. The rather involved procedure to prepare the tape was necessary to drive-off solvent and reaction product volatiles when converting the polyamic-acid to the polyimide which generally occurs above 160$^{o}$C with the degree of conversion being a function of time and temperature.

Example XVII

The prepared adhesive tapes (Example XVI) were used to bond titanium adherends (Ti 6Al-4V, per Mil-T-9046E, Type III Comp. C) with a nominal thickness of 0.13 cm. The four-fingered Ti(6AL-4V) panels were grit blasted with 120 grit aluminum oxide, washed with methanol, and treated with a Pasa-Jell 107 (Tradename for a titanium surface treatment available from Semco, Glendale, California) treatment to form a stable oxide on the

surface. The adherends were washed with water, dried in a forced-air oven at 100°C for five minutes and primed within two hours of the surface treatment by applying a thin coat of the polyamic-acid solution of the respective adhesives on the surfaces to be bonded. They were then air dried for thirty minutes in a forced-air oven, for fifteen minutes at 100°C, and fifteen minutes at 150°C. The primed adherends were stored in a polyethylene bag and placed in a desiccator until needed. Lap shear specimens were prepared by inserting the adhesive tape between the primed adherends using a 1.27 cm overlap (ASTM D-1002) and applying 2.07 MPa pressure in a hydraulic press during the heating schedule. Bonding temperature was monitored using a type K thermocouple spot-welded to the titanium adherend at the edge of the bondline.

Several bonding cycles for the adhesive (STPI/LARC) were investigated during this study to determine a bonding process which produced good strengths. The following processing cycles were used:

Cycle 1: (1) 2.1 MPa pressure, heating rate approximately 8.2°C/min, RT ⟶ 329°C; (2) hold fifteen minutes at 329°C; and (3) cool under pressure to approximately 150°C and remove from bonding press.

Cycle 2: Same as Cycle 1 except RT ⟶ 343°C.

Cycle 3: Same as Cycle 1 except RT ⟶ 343°C, hold for one hour.

A bonding cycle was selected from the above cycles (Cycle 3) and used to determine the effects of an additional heat treatment of the adhesive tape prior to bonding based on the lap shear strengths obtained. Based on those results, lap shear specimens were prepared for thermal exposure for 500 and 1000 hours at

204°C. Thermal exposure was performed in a forced-air oven controlled within ±1% of exposure temperature. Lap shear tests were conducted at room temperature, 177°C, and 204°C before (controls) and after exposure giving average lap shear strengths of 22.2, 23.9 and 24.3 MPa, respectively.

Summary

It can thus be seen that the present invention yields copolymers with a combination of flexible linkages that exhibit flow properties which make them particularly well suited for a wide range of applications including adhesives, molding resins, laminating resins, dielectric coating and protective coatings.

Claims

1. A copolyimide consisting essentially of chemically combined recurring units of the formulas:

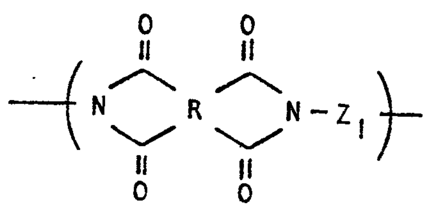 and 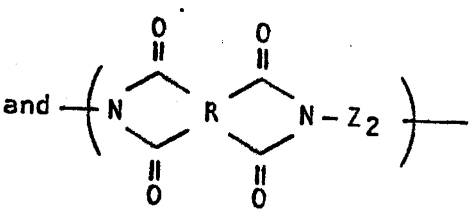

wherein R may differ between said recurring units and is an aromatic tetravalent radical; and

wherein $Z_1$ is of the formula:

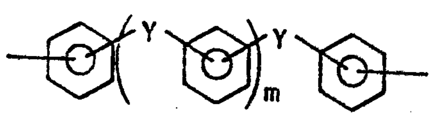

where Y may differ within the radical and is selected from the group consisting of -O-, -S-, -CO-, $-SO_2-$, -NH-, -SO-, $-\underset{R'}{\overset{O}{\overset{\|}{P}}}-$, $-C(CF_3)_2-$, and $-C(CH_3)_2-$, where

R' is alkyl or aryl and m is 0, 1, 2 or 3; and wherein $Z_2$ is of the formula 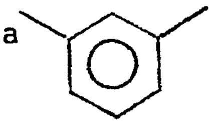 .

2. A copolyimide according to claim 1, wherein $Z_2$ is

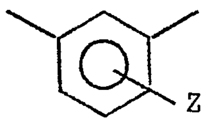

where Z is selected from the group consisting of alkyl, aryl, -Br, -Cℓ, -F, and $-CF_3-$.

3. A copolyimide according to claim 2, wherein Z is selected from the group consisting of -Br, -Cℓ, -F, -I, and $-CF_3$.

4. A copolyimide according to any one of claims 1-3, wherein R is selected from the group consisting of:

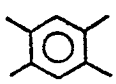 , 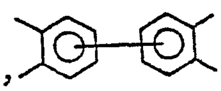 , 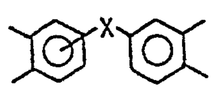 , 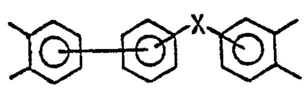 ,

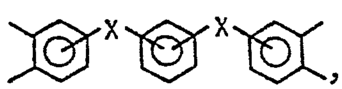 , and 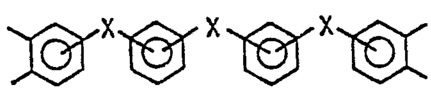

wherein X may differ within the R radical and is selected from the group consisting of -O-, -S-, -CO-, $-SO_2-$, -NH-, -SO-, $-C(CF_3)_2-$, $C(CH_3)_2$, and

O
||
-P- where R' is alkyl or aryl.
|
R'

5. A copolymer according to claim 4, wherein $Z_1$ is of the formula:

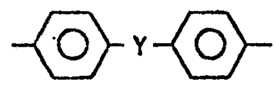

and Y is selected from the group consisting of -O-, -S-, -CO-, $-SO_2-$, -NH-, -SO-, $-\overset{\overset{O}{\|}}{\underset{\underset{R'}{|}}{P}}-$, $-C(CF_3)_2-$, and $-C(CH_3)_2$, where R' is alkyl or aryl.

6. A copolyimide according to claim 1 of the formula:

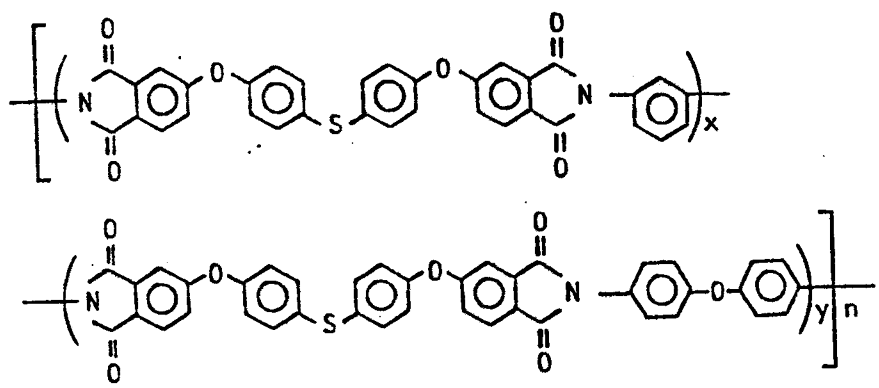

wherein the ratio x:y varies from 1:3 to 3:1 and n is 5-100.

7. A copolyimide according to claim 1 of the formula:

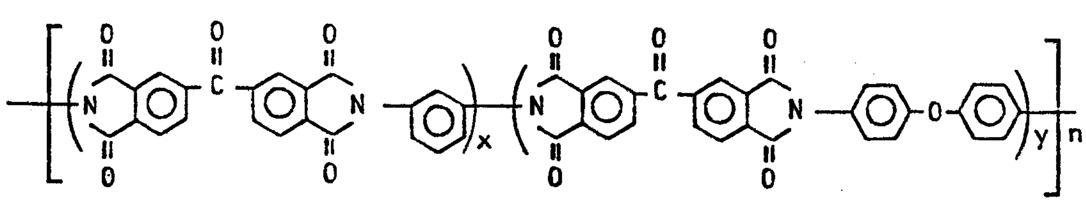

wherein the ratio x:y is 1:1 and n is 5-100.

8. A copolyimide according to claim 1 of the formula:

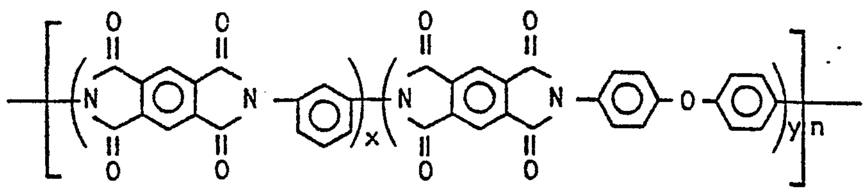

wherein the ratio x:y is 1:1 and n is 5-100.

9. A copolyimide according to claim 1 wherein R is selected from the group consisting of $R_1$, $R_2$, where $R_1$ is of the formula:

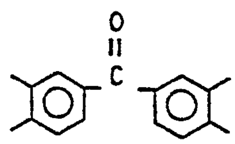

and $R_2$ is of the formula: 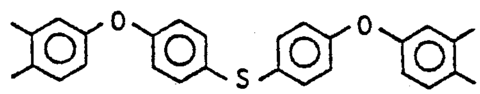

wherein $Z_1$ is of the formula 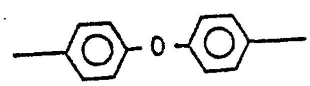 , and

wherein equimolar amounts of $R_1$, $R_2$, $Z_1$ and $Z_2$ are present.

10. A process for preparing copolyimides of improved flow properties comprising the steps of:

reacting, in an inert solvent, at a temperature of $10^{o}$-$30^{o}C$ an aromatic dianhydride of the structural formula:

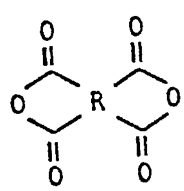

wherein R may differ between dianhydrides and is an aromatic tetravalent radical with a bridged diamine of formula:

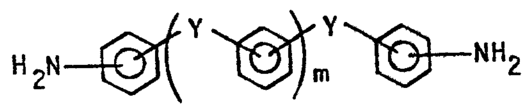

where Y may vary within the radical and is selected from the group consisting of -O-, -S-, -CO-, $-SO_2-$, -SO-, $-C(CF_3)_2-$, $-C(CH_3)_2-$, and $-\underset{R'}{\underset{|}{\overset{\overset{O}{\|}}{P}}}-$, where R' is alkyl or aryl and m is 0, 1, 2 or 3, and

a diamine of formula:

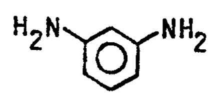

for a length of time sufficient to form a poly(amide-acid) soluble in said solvent; and

heating the resulting poly(amide-acid) to $150^{o}$-$400^{o}C$ for a time sufficient to form a solid copolyimide.

11. A process according to claim 10 wherein the aromatic dianhydride and the bridged diamine are reacted with a diamine of formula:

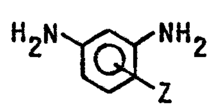

wherein Z is selected from the group consisting of aryl, alkyl, -Br, -I, -Cℓ, -F, and $-CF_3$.

12. The process of claims 10 or 11, wherein the poly(amide-acid) is converted to a copolyimide by:

precipitating the poly(amide-acid) in a non-solvent selected from the group consisting of water, alcohols and hydrocarbons;

filtering the precipitated poly(amide-acid) from the non-solvent;

drying the poly(amide-acid) at a temperature of $20^{\circ}$-$30^{\circ}C$ for 10-15 hours; and

heating the dried poly(amide-acid) in an oven for approximately one hour at about $100^{\circ}C$, then for approximately one hour at about $200^{\circ}C$ and then for approximately one hour at about $300^{\circ}C$.

13. The process of any one of claims 10-12, in which the poly(amide-acid) solution is converted to a polyimide film by:

casting the poly(amide-acid) upon a glass plate;

evaporating the solvent;

heating the poly(amide-acid) film for approximately one hour at about $100^{\circ}C$, then for approximately one hour at $200^{\circ}C$, and then for approximately one hour about $300^{\circ}C$; and

removing the film from the surface.

14. The process of any one of claims 10-13, wherein a dehydrating agent is added to the poly(amide-acid) solution to lower the temperature at which imidization will take place.

15. The process of claim 14 wherein the dehydrating agent is acetic anhydridge in pyridine.

16. A process according to claim 10 wherein R is selected from the group consisting of:

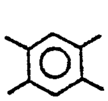, 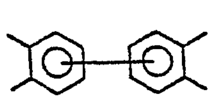, 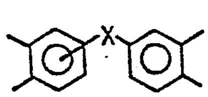, 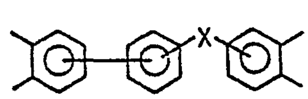,

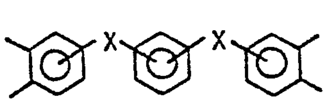, 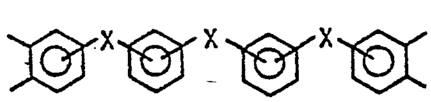

wherein X may differ within the R radical and is selected from the group consisting of -O-, -S-, -CO-, $-SO_2-$, $-C(CF_3)_2-$, $-C(CH_3)_2-$, and 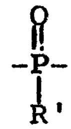 where R' is alkyl or aryl.

17. A process according to claim 16 wherein the bridged diamine is of the formula:

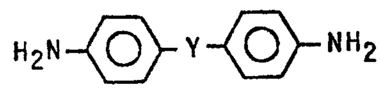

and Y is selected from the group consisting of -O-, -S-, -CO-, $-SO_2-$, -SO-, $-(CF_3)_2-$, $-C(CH_3)_2-$, and 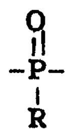 where R' is alkyl or aryl.

18. A process for preparing copolyimides of improved flow properties comprising the steps of:

reacting in an inert solvent, at a temperature of $10^o$-$30^oC$ about 1.0 parts by mole of an aromatic dianhydride of the structural formula:

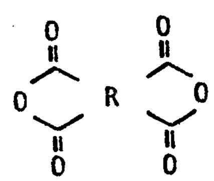

wherein R is selected from the group consisting of:

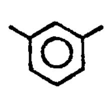 , 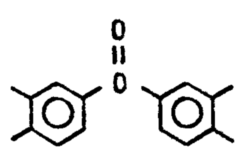

with about 0.5 parts by mole of a diamine of formula:

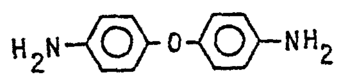

and with about 0.5 parts by mole of a diamine of the formula:

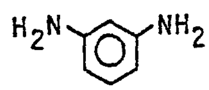

for a length of time sufficient to form a poly(amide-acid) soluble in said solvent; and

heating the resulting poly(amide-acid) to $150^{o}$-$400^{o}C$ for a time sufficient to form a solid copolyimide.

19. The process of claim 23 wherein R is

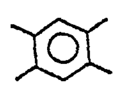

or

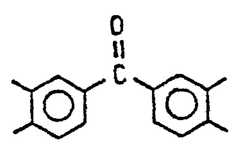

20. A process for preparing copolyimides of improved flow properties comprising the steps of:

reacting in an inert solvent, at a temperature of $10^{o}$-$30^{o}C$ about 1.0 part by mole of an aromatic dianhydride of the structural formula:

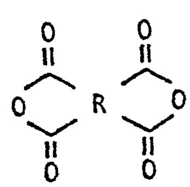

wherein R is of the formula:

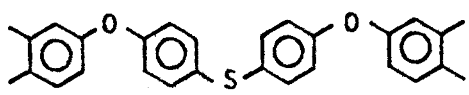

with about 0.25 to 0.75 parts by mole of a bridged diamine of the formula:

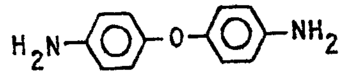

and with about 0.75 to 0.25 parts by mole of a diamine of the structural formula:

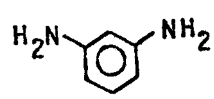

the total parts by mole of diamine equaling 1.0, for a length of time sufficient to form a poly(amide-acid) soluble in said solvent; and

heating the resulting poly(amide-acid) to $150^{o}$-$400^{o}C$ for a time sufficient to form a solid polyimide.

21. A process for preparing copolyimides of improved flow properties comprising the steps of:

reacting in an inert solvent, at a temperature of $10^{o}$-$30^{o}C$ about 1.0 parts by mole of an aromatic dianhydride of the formula:

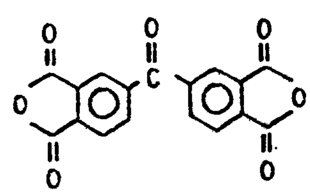

and about 1.0 part by mole of an aromatic dianhydride of the formula:

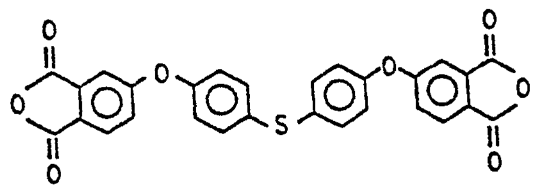

with about 1.0 part by mole of a bridged diamine of the formula:

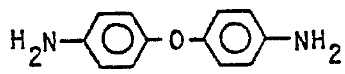

and with about 1.0 part by mole of a diamine of the formula:

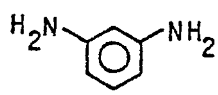

for a length of time sufficient to form a poly(amide-acid) soluble in said solvent; and

heating the resulting poly(amide-acid) from $150^{o}$-$400^{o}C$ for a time sufficient to form a polyimide.

22. The copolyimide obtained in accordance with the process of claim 21.

23. A process for bonding materials together by surface attachment comprising the steps of:

preparing the surface of a first material to be bonded;

preparing the surface of a second material to be bonded;

placing a layer of a copolyimide consisting essentially of chemically combined units of the formulas:

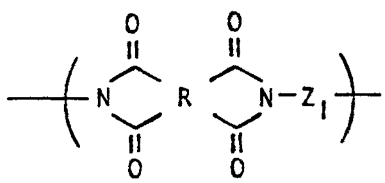

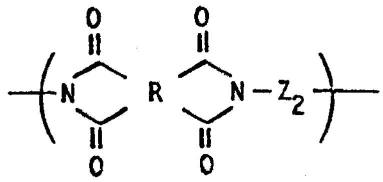

wherein R may differ between said recurring units and is an aromatic tetravalent radical, and wherein $Z_1$ is of the formula:

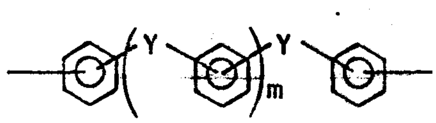

where Y may differ within the radical and is selected from the group consisting of -O-, -S-, -CO-, $-SO_2-$, -NH-, -SO-, 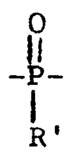, $-C(CF_3)_2-$, $-C(CH_3)_2-$ where R is alkyl or aryl and m is 0, 1, 2 or 3, and wherein $Z_2$ is of the formula:

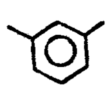

on the first prepared surface;

aligning the second surface with the first surface;

pressing the first and second surfaces together to compress the copolyimide layer; and

subjecting the polyimide layer to a bonding cycle wherein the polyimide is melted under sufficient pressure to cause the molten polyimide to wet the surfaces of the first and second materials and adhere thereto and then cooled under sufficient pressure to form cohesive bonds within the polyimide layer.

24. The process of claim 23 in which the bonding cycle comprises the steps of

heating the polyimide layer at a rate of $7^{o}$-$10^{o}C$/min from room temperature to $340^{o}$-$350^{o}C$;

holding the polyimide at $340^{o}$-$350^{o}C$ for approximately one hour; and

cooling the polyimide from $340^{o}$-$350^{o}C$ to $-120^{o}$ to $-160^{o}C$;

all of the steps being performed under 50-500 psi pressure.

25. The process of claims 23 or 24 wherein the first and second surfaces are pressed together by means of a bonding press wherein the first and second materials are mounted and from which the bonded materials are removed after the bonding cycle takes place.

26. The process of claim 23 wherein $Z_2$ is of the formula:

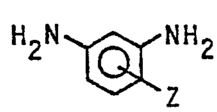

where Z is selected from the group consisting of alkyl, aryl, -Br, -Cℓ, -F, and $-CF_3$.

27. The process of claim 23 wherein R is selected from the group consisting of $R_1$, $R_2$, where $R_1$ is of the formula:

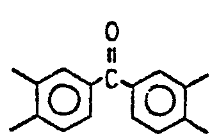

and $R_2$ is of the formula:

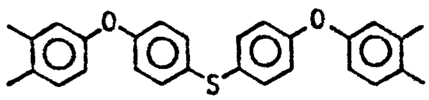

wherein $Z_1$ is of the formula

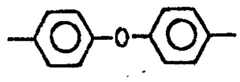

and wherein equimolar amounts of $R_1$, $R_2$, $Z_1$ and $Z_2$ are present.

28. The process of claim 23 wherein the layer of copolyimide placed upon the first prepared surface is of the formula:

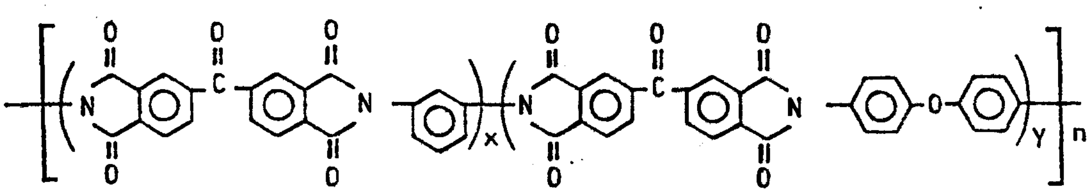

wherein the ratio x:y is 1:1 and n is 5-100.

29. The process of claim 23 wherein the layer of copolyimide placed upon the first prepared surface is of the formula:

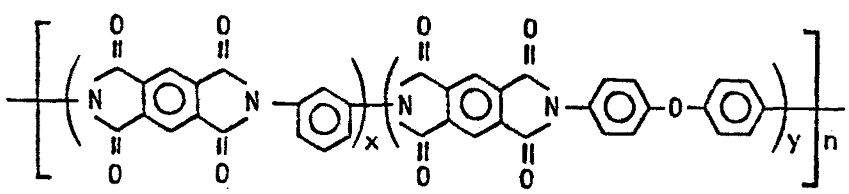

wherein the ratio x:y is 1:1 and n is 5-100.

30. The process of claim 23 wherein the layer of copolyimide placed upon the first prepared surface is of the formula:

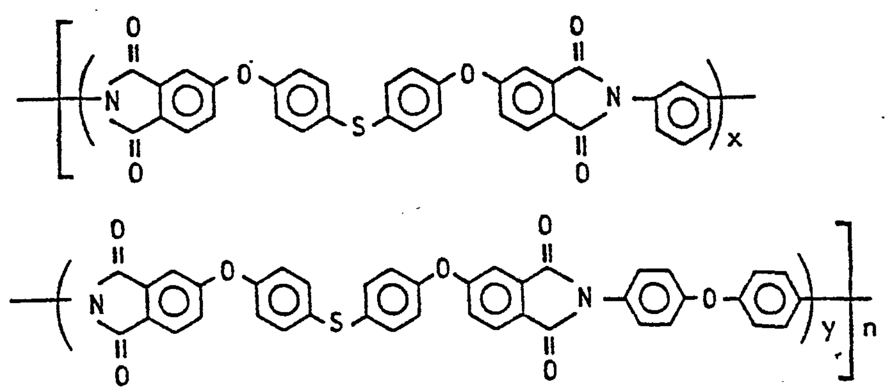

wherein the ratio of x:y varies from 1:3 to 3:1 and n is 5-100.

31. A copolyimide adhesive solution formed as the reaction product of benzophenonetetracarboxylic dianhydride and a mixture of 2-methoxyethyl ether, N,N'-dimethyl-acetamide and 4,4'-diaminodiphenyl ether combined with a quantity of meta-phenylenediamine.

32. The copolyimide adhesive solution of claim 31 wherein the molar ratio of the benzophenonetracarboxylic dianhydride to the 4,4'-diaminodiphenyl ether and meta-phenylenediamine is 2:1:1.

33. The copolyimide adhesive solution of claim 31 wherein equimolar quantities of 4,4'-diaminodiphenyl ether and meta-phenylenediamine are reacted with a molar quantity of benzophenonetetracarboxylic dianhydride equal to the sum molar quantities of the 4,4'-diaminodiphenyl ether and meta-phenylenediamine.

34. A method of preparing a copolyimide adhesive solution comprising:

combining a quantity of 2-methoxyethyl ether with a quantity of N,N-dimethylacetamide to form a solvent mixture in a reaction vessel,

adding a quantity of benzophenonetetracarboxylic dianhydride, 4,4'-diaminodiphenyl ether and meta-phenylenediamine to the solvent mixture,

stirring the combined ingredients at room temperature to facilitate reaction, and

decanting a copolyimide adhesive solution from the reaction vessel.

35. The method of claim 34 wherein the molar ratio of the benzophenonetetracarboxylic dianhydride, 4,4'-diaminodiphenyl ether and meta-phenylenediamine is 2:1:1.